# EUROPEAN PATENT APPLICATION

(11) **EP 4 744 617 A1**
(43) Date of publication of application: **20.05.2026**
(21) Application number: 24815771.1
(22) Date of filing: 22.05.2024
(51) Int. Cl.: A61C 7/08, A61C 13/00, A61C 9/00, A61C 19/00, B29C 64/124, B29C 64/386, B29C 64/35, B29C 64/255, B29C 64/264, B29C 64/245

(54) **CONTINUOUS PRODUCTION METHOD OF TRANSPARENT ORTHODONTIC DEVICE AND TRANSPARENT ORTHODONTIC DEVICE MANUFACTURED BY SAME CONTINUOUS PRODUCTION METHOD**

(30) Priority: 31.05.2023 KR 20230069711
(71) Applicant: GRAPHY INC., Geumcheon-gu Seoul 08501 (KR)
(72) Inventor: SIM, Un Seob, 06583 Seoul (KR)
(74) Representative: BCKIP Part mbB
(86) International application number: PCT/KR2024/006931
(87) International publication number: WO 2024/248394

(57) **Abstract**

The present invention relates to a continuous production method of a transparent orthodontic device and a transparent orthodontic device manufactured by the continuous production method, and has a purpose to manufacture a patient-customized transparent orthodontic device by using 3D data on an oral structure of a patient. By the present invention, the orthodontic device may be manufactured by 3D printing, and washing, supporter separation, post-curing, and heat treatment processing may be performed as continuous processes, so as to increase production efficiency and enable selection of defective products without using separate equipment. In addition, when the orthodontic device is manufactured by 3D printing, an output time can be shortened and curing efficiency can be increased, and when the orthodontic device is output, a barcode enabling recognition of unique information of the patient is output as well, so that a plurality of orthodontic devices can be continuously produced.

## Description

### Technical Field

The present invention relates to a method for continuous production of a transparent orthodontic device and a transparent orthodontic device produced by the process for continuous production thereof.

### Background Art

3D printing is a process technology that creates a three-dimensional shape by repeatedly layering two-dimensional cross-sections using digitally designed data. This allows for significant freedom in design or modification, and can significantly reduce the cost and time required for prototype production.

Furthermore, 3D printing technology allows for the simple production of products with even the most complex shapes, and thus the types of products that can be produced using 3D printing technology are virtually limitless. Consequently, 3D printing technology is expected to shift technological paradigms and drive industrial innovation in diverse fields, including manufacturing, healthcare, and IT fields.

3D printer technology can be divided according to the material into a vat photopolymerization method, a laser sintering printing method, a resin extrusion method, an inkjet printing method, a PolyJet printing method, and a laminated object manufacturing method.

Among these processes, the vat photopolymerization method is a method of manufacturing a molded product by curing a photo-curable liquid resin with a laser beam or strong ultraviolet (UV) rays. Examples of this vat photopolymerization method include a Stereo-Lithography Apparatus (SLA) method and a Digital Light Processing (DLP) method.

3D printing technology has recently been used in various medical fields and is very efficient in terms of production time, cost, and process compared to conventional machining methods. In particular, the vat photopolymerization method may be used in the medical field in which it is needed to manufacture a molded product having excellent surface roughness and a complex shape.

Orthodontic treatment utilizes the natural tendency of teeth to move when subjected to a certain force. A method most widely used for orthodontic treatment is a fixed treatment method that attaches a bracket to teeth and moves the teeth using elasticity of an orthodontic wire and a rubber band, etc. The bracket is typically made of metal, and has the disadvantage of being noticeable during treatment.

To overcome this disadvantage, a transparent orthodontic method has been proposed. Transparent orthodontic treatment is a procedure of correcting teeth arrangement by producing a series of transparent orthodontic devices corresponding to progressive stages that change step by step from the state of the teeth before orthodontic treatment to the state of the teeth desired to be corrected and replacing the bracket into the teeth.

Specifically, the procedure with the transparent orthodontic device was performed using an orthodontic device developed by "Align Technology, Inc." (USA) under the name "Invisalign System" in 1997, which is disclosed in U.S. Pat. Nos. 5,975,893 and 6,217,325, etc.

Conventional transparent orthodontic devices are produced using plastic materials, and a method for producing patient-specific transparent orthodontic devices using a 3D printer has been developed.

However, in order to produce a transparent orthodontic device using a 3D printer, many post-treatment processes, such as a supporter removal process and a residual resin removal process, should be performed subsequently to the printing process using a 3D printer.

Therefore, production efficiency was low, making it impossible to produce a large number of orthodontic devices.

In order to solve the above-described problem, it is necessary to develop a process for continuous production of a transparent orthodontic device, which is a process capable of continuously producing a transparent orthodontic device by acquiring and inputting data on the patient's oral structure.

### [Prior Art Documents]

### [Patent Documents]

(Patent Document 1) KR 10-2023-0032528 A1

### DISCLOSURE

### Technical Problem

An object of the present invention is to provide a method for continuous production of a transparent orthodontic device and a transparent orthodontic device produced by the method for continuous production thereof.

Another object of the present invention is to provide a method for continuous production of a transparent orthodontic device, which is a method for producing a patient-specific transparent orthodontic device using 3D data on the patient's oral structure, may increase production efficiency by producing the orthodontic device by 3D printing and continuously performing the washing, supporter separation, post-curing, and heat treatment processes, and may sort defective products without using separate equipment.

Still another object of the present invention is to provide a method for continuous production of a transparent orthodontic device, which is capable of shortening the printing time and increasing the curing efficiency when producing the orthodontic device by 3D printing, and is capable of continuously producing a plurality of orthodontic devices by printing a barcode that may identify the patient identification information together with the orthodontic device.

### Technical Solution

To achieve the above object, the present invention relates to a method for continuous production of a transparent orthodontic device, which may include: a 3D input step of inputting 3D information on a patient's oral structure; a 3D model generation step of generating a plurality of 3D models divided into a plurality of regions by setting a range of interest using the 3D information and setting the central axis of the oral structure as the x-axis; a 3D printing step of printing an orthodontic device from the plurality of 3D models using a 3D printer; a step of washing the printed orthodontic device in a rotating body; a step of separating a supporter from the washed orthodontic device; a step of post-curing the orthodontic device from which the supporter has been separated; and a step of heat-treating the post-cured orthodontic device.

The 3D printer is a top-down 3D printer, wherein the top-down 3D printer may include: a resin tank configured to store a photocurable polymer composition; an optical module installed above the resin tank and configured to irradiate light from a light source; a plate member positioned within the resin tank and movable up and down; an inert gas injection unit configured to maintain a portion cured by irradiation of the photocurable polymer composition within the resin tank with light generated from the optical module in an inert gas atmosphere; and a heating unit configured to increase the temperature within the resin tank to lower the viscosity of the photocurable polymer composition.

The 3D printer may further include a level control sensor configured to check the level of the photocurable polymer composition in the resin tank and to alarm whether the photocurable polymer composition needs to be replenished.

The plate member may be separated so that the orthodontic device may be transferred to the washing step after printing.

The resin tank may have a dual structure and include an internal resin tank part that is movable up and down and an external cover part.

The 3D printed orthodontic device may include a tooth portion, a supporter portion, and a bottom portion, and may include a barcode that may identify patient information on the supporter portion and/or the bottom portion.

The step of washing in the rotating body may be performed to remove surface protrusions and residual resin from the printed orthodontic device.

The step of separating the supporter may be performed by fixing the orthodontic device through a fixing means, and then completely removing the supporter connected to the orthodontic device using a supporter removal device.

The fixing means may include a pair of support means, wherein the support means may recognize a plurality of points in the tooth portion of the orthodontic device and press and fix the points on both sides of the tooth portion.

The supporter removal device may separate the supporter from the orthodontic device by moving along the boundary where the orthodontic device and the supporter are connected to each other after the orthodontic device is fixed by the fixing means.

The step of post-curing may be performed by UV light irradiation in an inert gas atmosphere.

The inert gas may be selected from the group consisting of nitrogen, argon, helium, krypton, neon, and mixtures thereof.

The orthodontic device cured by UV light irradiation may have improved transparency.

The step of heat treating may be performed by placing the post-cured orthodontic device in boiling water for 1 to 10 minutes.

The step of heat-treating may be performed by treating the post-cured orthodontic device with steam for 1 to 10 minutes.

A transparent orthodontic device according to another embodiment of the present invention may be produced by the method for continuous production.

### Advantageous Effects

The present invention relates to a method for producing a patient-specific transparent orthodontic device using 3D data on the patient's oral structure. According to the present invention, it is possible to increase production efficiency by producing the orthodontic device by 3D printing and continuously performing the washing, supporter separation, post-curing, and heat treatment processes, and sort defective products without using separate equipment.

In addition, it is possible to shorten the printing time and increase the curing efficiency when producing the orthodontic device by 3D printing, and to continuously produce a plurality of orthodontic devices by printing a barcode that may identify the patient's unique information together with the orthodontic device.

### Brief Description of Drawings

FIG. 1 is a flowchart of a method for continuous production of a transparent orthodontic device according to one embodiment of the present invention.
FIG. 2 illustrates a 3D printer according to one embodiment of the present invention.
FIG. 3 shows 3D modeling of a transparent orthodontic device according to one embodiment of the present invention.
FIG. 4 relates to a transparent orthodontic device including a barcode according to one embodiment of the present invention.
FIG. 5 relates to a transparent orthodontic device including a barcode according to one embodiment of the present invention.
FIG. 6 relates to a transparent orthodontic device in a state of being lifted and fixed by a support means according to one embodiment of the present invention.
FIG. 7 relates to the removal of a supporter from a transparent orthodontic device according to one embodiment of the present invention.
FIG. 8 shows transparent orthodontic devices positioned on a tray according to one embodiment of the present invention.

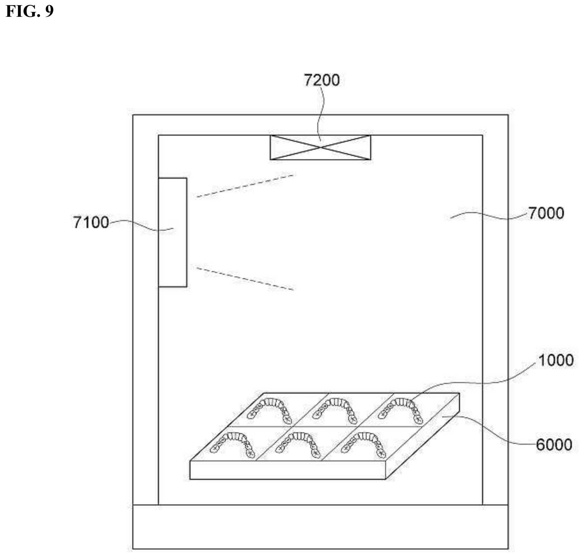

FIG. 9 shows transparent orthodontic devices in a post-curing apparatus according to one embodiment of the present invention.

### Best Mode

The present invention relates to a method for continuous production of a transparent orthodontic device, including: a 3D input step of inputting 3D information on a patient's oral structure; a 3D model generation step of generating a plurality of 3D models divided into a plurality of regions by setting a range of interest using the 3D information and setting the central axis of the oral structure as the x-axis; a 3D printing step of printing an orthodontic device from the plurality of 3D models using a 3D printer; a step of washing the printed orthodontic device in a rotating body; a step of separating a supporter from the washed orthodontic device; a step of post-curing the orthodontic device from which the supporter has been separated; and a step of heat-treating the post-cured orthodontic device.

### Mode for Invention

Hereinafter, embodiments of the present invention will be described in detail so that those skilled in the art to which the present invention pertains can easily carry out the present invention. However, the present invention may be embodied in various different forms and is not limited to the embodiments described herein.

In the present invention, 3D printing refers to a process of manufacturing a three-dimensional object by layering material using 3D digital data. In the present specification, although description is made focusing on the Digital Light Processing (DLP), Stereolithography Apparatus (SLA) and PolyJet printing as 3D printing technologies, it may be understood that the present invention is also applicable to other 3D printing technologies.

In the "Invisalign System", three-dimensional scan data of teeth is digitally segmented tooth by tooth using dedicated computer software, 20 to 30 pairs of models are made step by step to the position to which the teeth should finally move through virtual simulation, and then a transparent plastic frame that allows the teeth to be moved is produced for each model and distributed to the patient.

The "Invisalign System" is characterized in that the teeth to be corrected may be gradually moved to the final target point by inserting the prepared series of plastic frame-type orthodontic devices into the teeth step by step, the plastic frame is made of a transparent material and is not visually recognized well from the outside, which can greatly help the daily social life of an orthodontic patient, and the patient may also attach and detach the orthodontic device if necessary.

However, although the transparent orthodontic device has the above-described advantages compared to the fixed orthodontic device using the bracket described above, the pain felt by the patient is considerable.

That is, since this transparent orthodontic treatment induces teeth alignment by using a hard sheet due to the nature of the material to ensure aesthetics, the transparent orthodontic device is hard due to the nature of the hard material, so that the pain felt by the patient is considerable.

In addition, although the transparent orthodontic device has many advantages, it is inferior to the fixed orthodontic device in that if the transparent orthodontic device does not fit well with the dental structure during tooth movement, the transparent orthodontic device fails to be closely fitted to the dental structure and the desirable tooth movement is difficult. Particularly, when teeth are corrected using the transparent orthodontic device, a phenomenon occurs in which the teeth unintentionally tilt.

If the phenomenon in which the teeth tilt continues, problems arise in that the teeth gradually lie down, or in severe cases, they collide with the roots of adjacent teeth, causing root resorption, and the first produced transparent orthodontic device may not fit with the dental structure, which can lead to the troublesome and cost of reproducing the transparent orthodontic device and the increase in the period of orthodontic treatment.

To solve the above problems, a 3D printer is used to produce a patient-specific transparent orthodontic device, which is then used for orthodontic treatment.

The patient-specific transparent orthodontic device is produced based on accurate information about the patient's tooth structure acquired using a 3D scanner, and the degree of tooth movement for each step can be accurately derived based on information about the tooth structure.

That is, when information about the patient's tooth structure is acquired using a 3D scanner and then input into a program that creates a 3D model, a 3D model is created that takes into account the degree of tooth movement for orthodontic treatment.

For the above program, a commercially available program that creates a 3D tooth model may be purchased and used.

As described above, after creating multiple 3D models for orthodontic treatment, an orthodontic device may be printed with a 3D printer using the 3D models.

As the 3D printer, various types of 3D printers as described above may be used depending on the material, but in order to produce a transparent orthodontic device, DLP (Digital Light Processing), SLA (Stereo-Lithography Apparatus) and PolyJet 3D printers may be used.

The orthodontic device that is printed as described above may be printed in a state in which the orthodontic device is connected to the supporter on the plate member within the 3D printer.

The orthodontic device connected to the supporter as described above may be produced into a final orthodontic device through the steps of removing the remaining resin, separating the supporter, and performing post-curing.

As described above, although it is possible to produce a patient-specific transparent orthodontic device using a 3D printer in a patient-specific manner, producing the same using the 3D printer takes a lot of time for printing, and it is difficult to perform the steps of removing the remaining resin, separating the supporter, and post-curing in a continuous process. There is a problem in that it is difficult to increase transparency by inducing complete curing of the polymer during the post-curing process and produce an orthodontic device that exhibits properties suitable for orthodontic use.

In addition, as a trade-off for the possibility of producing a patient-specific device, it is not easy to produce multiple orthodontic devices. That is, after printing one orthodontic device using a 3D printer and producing it as a complete product, it is not easy to distinguish between patients during the post-treatment process after printing multiple orthodontic devices using information about multiple patients.

Accordingly, the present invention provides a method capable of producing a transparent orthodontic device through a continuous process, in which the method may shorten the time required for printing by increasing the printing speed when printing orthodontic devices using a 3D printer, increase the curing efficiency, and increase production efficiency through a continuous process.

In addition, as described below, when printing a transparent orthodontic device, a barcode capable of identifying the patient's personal information is included, so that patient information for the printed orthodontic device may be clearly identified by the barcode, so that a post-treatment process may be performed continuously for a plurality of orthodontic devices, thereby enabling mass production.

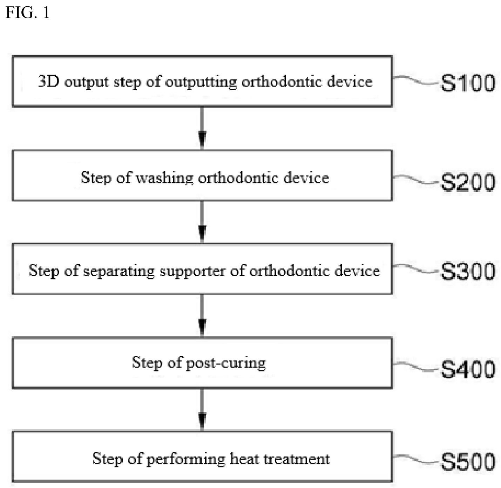

Specifically, as shown in FIG. 1, a method for continuous production of a transparent orthodontic device according to one embodiment of the present invention may include: a 3D printing step (S100) of printing an orthodontic device using a 3D printer; a step (S200) of washing the printed orthodontic device in a rotating body; a step (S300) of separating a supporter from the washed orthodontic device; a step (S400) of post-curing the orthodontic device from which the supporter has been separated; and a step (S500) of heat-treating the post-cured orthodontic device.

The 3D printing step is a step of printing a 3D model, created using 3D information about the patient's oral structure, using a 3D printer.

The 3D printer is as described above, and the step of creating the 3D model is also as described above.

However, the 3D printer of the present invention is characterized by being a top-down 3D printer.

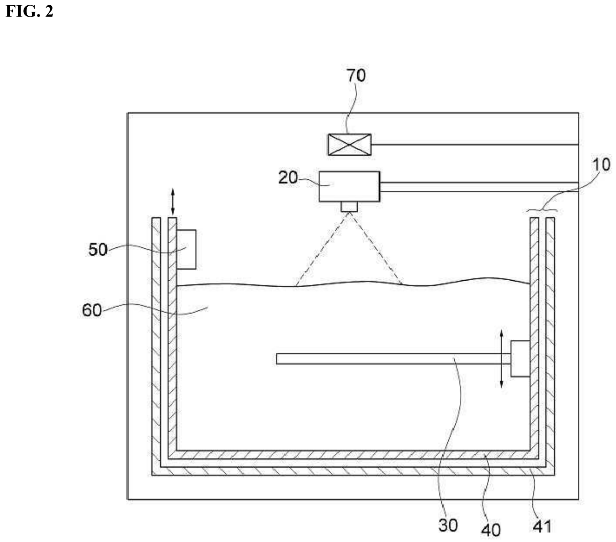

FIG. 2 illustrates a top-down 3D printer according to one embodiment of the present invention.

The top-down 3D printer according to FIG. 2 may include: a resin tank 10 configured to store a photocurable polymer composition; an optical module 20 installed above the resin tank and configured to irradiate light from a light source; a plate member 30 positioned within the resin tank and capable of moving up and down; an inert gas injection unit 50 configured to maintain a portion cured by irradiation of the photocurable polymer composition within the resin tank with light generated from the optical module in an inert gas atmosphere; and a heating unit 70 configured to increase the temperature within the resin tank 10 to lower the viscosity of the photocurable polymer composition.

Specifically, the resin tank may contain a photocurable polymer composition 60 for producing a transparent orthodontic device of the present invention, which will be described later. In addition, the optical module may cure the photocurable polymer composition 60 in the resin tank 10 by irradiation with light generated from the light source, thereby producing a printed product.

Specifically, the optical module 20 may be configured to include a laser light source of the SLA method or a light source of DLP (Digital Light Processing), which is a mask projection image curing method. Not only a laser light source but also a light source of DLP (Digital Light Processing) which is a mask projection image curing method may be applied as long as it is a light source that cures the photocurable polymer composition resin.

The plate member 30 may move up and down within the resin tank 10. That is, the plate member 30 is positioned within the resin tank 10 and may move downward when the photocurable polymer composition 60 begins to cure by light generated from the optical module 20.

The inert gas injection unit 50 enables a portion where light generated by the optical module 20 comes into contact with the photocurable polymer composition 60 in the resin tank 10 to be cured under an inert gas atmosphere.

That is, the photocurable polymer composition 60 is cured by irradiation with light generated from the light source in both the DLP method and the SLA method, but the curing is commonly inhibited by oxygen.

At this time, when contact with oxygen is blocked by changing the portion in contact with oxygen to an inert gas atmosphere, curing inhibition by oxygen does not occur, so that the production speed of the printed product is improved.

In addition, when the photocurable polymer composition 60 is cured by light under an inert gas atmosphere, the degree of curing and the surface quality are improved by the inert gas, and the surface of the printed product is formed smoothly, so that the printing speed is improved compared to the existing DLP or SLA 3D printer, and the hardness of the printed product and the product quality are improved.

More specifically, the inert gas injection unit 50 is formed on one side of the resin tank 10 and is connected to an inert gas storage unit (not shown) so that the inert gas may be continuously introduced.

The inert gas is selected from the group consisting of nitrogen, argon, helium, krypton, neon, and mixtures thereof. Preferably, it is selected from the group consisting of nitrogen, argon, helium, and mixtures thereof. Considering economic feasibility, the inert gas is most preferably nitrogen gas. However, the inert gas is not limited to the above examples, and any gas that may be easily selected by a person skilled in the art may be used.

As described above, as oxygen contact in the portion where light comes into contact with the photocurable polymer composition 60 in the resin tank 10 is blocked by the inert gas injection unit 50, the effect of inhibiting curing may be prevented, and the hardness of the printed product may also be increased by the inert gas. In addition, due to the improvement in curing speed, precise printing of a fine surface is also possible.

The inert gas injection unit 50 is formed on one side of the inside of the resin tank 10, and the resin tank 10 allows the entire inside to be maintained in an inert gas atmosphere since the 3D printer is in a completely closed state.

In another embodiment of the present invention, the inert gas injection unit 50 may inject the inert gas in the form of an air curtain so as to block contact with oxygen in a portion where light generated from the optical module 20 is irradiated to the photocurable polymer 60 in the resin tank 10.

The inert gas injection unit 50 that injects the inert gas in the form of an air curtain as described above is a method suitable for a large 3D printer. For a small 3D printer, it is possible to prevent external oxygen from entering the printer, but for a large 3D printer, it is not realistically possible to prevent external oxygen from entering the printer.

Considering these points, the inert gas injection unit 50 may inject the inert gas in the form of an air curtain. When the inert gas is injected in the form of an air curtain, oxygen contact in the portion where the light generated from the optical module 20 is irradiated and comes into contact with the photocurable polymer composition 60 may be blocked, thereby preventing the inhibition of curing by oxygen.

The heating unit 70 serves to increase the temperature within the resin tank 10 in order to lower the viscosity of the photocurable polymer composition 60. When the resin tank 10 is heated to a temperature of 30 to 70°C by the heating unit 70, the viscosity of the photocurable polymer composition 60 within the resin tank 10 may be lowered, and the curing speed may be increased.

When the temperature is increased by the heating unit 70 as described above, the curing speed may be increased to a height of 40 to 80 mm within 1 to 2 minutes. Thus, when an orthodontic device is printed using a 3D printer, it may be produced at a high speed.

A printed product may be produced by curing the photocurable polymer 60 in the resin tank 10 using a light source from an image corresponding to the cross-sectional area of a bottom portion 3000 of an orthodontic device, and then curing the cross-sectional area of a tooth portion 1000 of the orthodontic device.

The top-down 3D printer prints a product by irradiating light, and at this time, it may further include a position control unit (not shown) that may control the up and down movement of the plate member 30 by recognizing the level of the photocurable polymer composition 60 in the resin tank 10.

Alternatively, the top-down 3D printer may further include a level control sensor (not shown) configured to check the level of the photocurable polymer composition 60 in the resin tank 10 and to alarm whether the photocurable polymer composition 60 needs to be replenished.

The level control sensor (not shown) may check whether the level of the photocurable polymer composition in the resin tank 10 is insufficient. That is, in order to produce an orthodontic device in a top-down manner, the photocurable polymer composition 60 in the resin tank 10 should be filled to a certain level or higher, and this may be checked through the level control sensor (not shown).

The resin tank 10 may have a dual structure and include an internal resin tank part 40 that may move up and down and an external cover part 41. The internal resin tank part 40 is configured to be able to move up and down, and when the level of the photocurable polymer composition 60 is lowered by the level control sensor (not shown), the internal resin tank part 40 moves upward, enabling the printing of the orthodontic device even without filling the photocurable polymer composition 60.

The plate member 30 allows a polymer material cured by light irradiation to be layered and subsequently the next cross-sectional area to be layered, thereby producing a final printed product.

At this time, the plate member 30 should be configured to move downward within the resin tank 10 so that the cured polymer material may be layered.

In addition, after the final printed product is produced, the plate member 30 may move upward in the resin tank 10 in order to smoothly separate the printed product from the plate member 30.

At this time, the movement of the plate member 30 may be controlled by a plate moving part. The plate moving part is attached to the frame of the 3D printer and moves up and down by a power unit (not shown). At this time, the power unit uses a known method, and any method that may be easily selected by a person skilled in the art may be used.

In addition, the plate member 30 is detachable, and after the orthodontic device is completely printed, the plate member 30 may be detached from the 3D printer, so that the plate member 30 itself may be moved. From the plate member 30 to which the orthodontic device has been attached, only the orthodontic device may be separated using a tool such as a blade. The separated orthodontic device is moved to the washing step.

At the same time as the process of separating the orthodontic device from the plate member 30, a separate plate member 30 may be attached to the 3D printer and used to continuously print an orthodontic device.

Alternatively, the plate member 30 from which the previously printed orthodontic device has been separated may be reattached to the 3D printer and used to continuously print an orthodontic device.

The orthodontic device printed using the 3D printer includes a tooth portion 1000, a supporter portion 2000, and a bottom portion 3000, and may include a barcode that may identify patient information on the supporter portion 2000 and/or the bottom portion 3000.

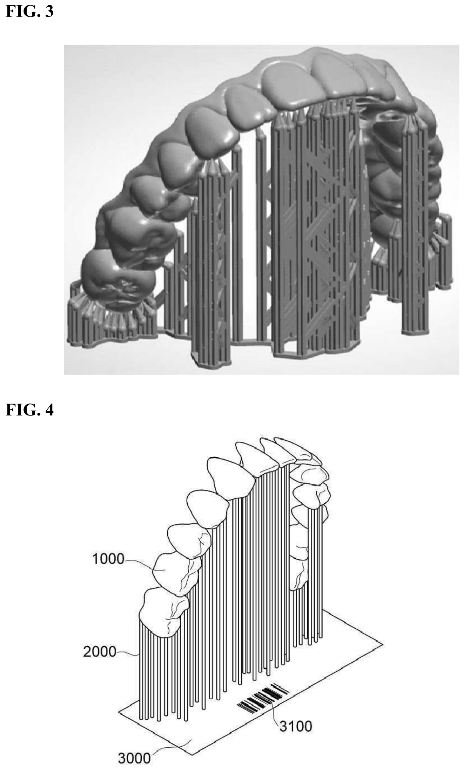

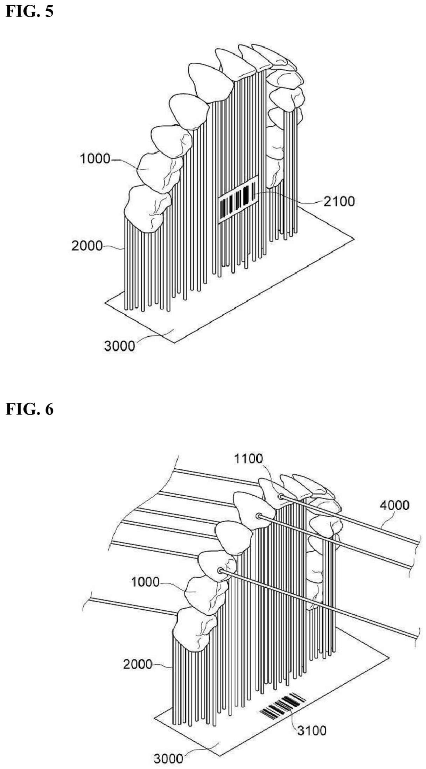

FIG. 3 shows a 3D modeling image of an orthodontic device according to one embodiment of the present invention, FIG. 4 shows a barcode formed on the bottom portion 3000, and FIG. 5 shows a barcode 3100, 2100 formed on the supporter portion 2000.

The tooth portion 1000 is printed in a shape that may move the teeth for orthodontic purposes depending on the patient's tooth structure, and the supporter portion 2000 is printed together with the tooth portion 1000 in order to print the tooth portion 1000 by a 3D printer. As described above, the 3D printer prints the bottom portion 3000, the supporter portion 2000, and the tooth portion 1000 in that order, and when printing, the cross-section of each of the bottom portion 3000, the supporter portion 2000, and the tooth portion 1000 may be printed. At this time, in order to prevent the shape from being deformed due to gravity when the tooth portion 1000 is finally printed, the supporter portion 2000 may be formed between the tooth portion and the bottom portion 3000 and serve as a support.

The bottom portion 3000 and the supporter portion 2000 are characterized in that a barcode 3100, 2100 capable of identifying patient information is formed thereon.

The barcode 3100, 2100 may be formed to enable identification of patient information during the 3D modeling process.

The orthodontic device including the barcode 3100, 2100 as shown in FIGS. 4 and 5 may be subjected to a washing step.

In the washing step, a washing process may be carried out in a rotating body. The rotating body operates on the same principle as a spin dryer, and when the printed orthodontic device is placed and rotated in a cylindrical rotating body, surface protrusions unnecessarily formed during the printing process and residual resin may be removed.

The orthodontic device from which surface protrusions and residual resin have been removed through the washing process as described above is subjected to a supporter removal process after identifying patient information through the barcode 3100, 2100 as described above.

In the supporter removal process, as shown in FIG. 6, a supporter removal device 5000 may remove the supporter portion while moving along the boundary between the tooth portion 1000 and the supporter portion 2000 in a state in which the tooth portion is supported by a fixing means 4000 that may recognize a specific point on the tooth portion 1000 in the orthodontic device.

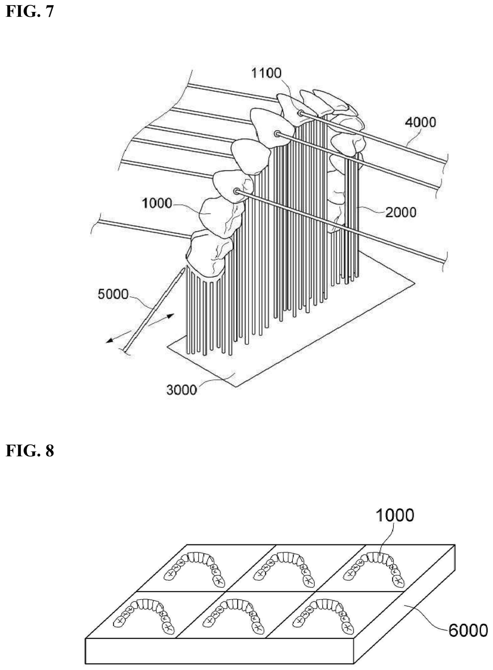

That is, as shown in FIG. 7, the supporter portion 2000 may be removed as the supporter removal device 5000 moves along the shape of the boundary between the tooth portion 1000 and the supporter portion 2000. The supporter removal device 5000 may move along the shape of the tooth portion 1000 while coming into contact with a surface of the tooth portion 1000 to which the supporter portion 2000 has been connected. Since a portion of the supporter portion 2000 which is connected to the tooth portion 1000 is formed to have a small thickness, the supporter portion 2000 may be easily removed by the movement of the supporter removal device 5000. A portion of the supporter portion 2000 that is connected to the tooth portion 1000 has a smaller thickness. More specifically, the thickness of the portion where the supporter portion 2000 is connected to the tooth portion 1000 may be less than 1 mm, or 0.3 to 0.5 mm. A portion that is connected to the bottom portion 3000 and extends in the longitudinal direction generally has a thickness of more than 1 mm, and thus may support the tooth portion 1000.

However, since one end that is connected to the tooth portion 1000 as described above is printed in a form in which the thickness suddenly becomes smaller, the supporter portion 2000 may be easily removed simply by moving the supporter removal device 5000. In addition, since the connected portion of the supporter portion 2000 is printed with a small thickness, even if the supporter portion 2000 is removed by the supporter removal device 5000, a portion of the tooth portion 1000 to which the supporter portion 2000 has been connected may be removed to provide a smooth surface state without leaving a trace.

In order to remove the supporter portion 2000 by the supporter removal device 5000, the orthodontic device may be fixed by the fixing means 4000, and then the supporter portion 2000 connected to the orthodontic device may be completely removed using the supporter removal device 5000.

Specifically, as shown in FIG. 6, the fixing means 4000 includes a pair of support means. After the fixing means 4000 recognizes a plurality of points 1100 in the orthodontic device, the pair of support means may recognize the plurality of points 1100 in the tooth portion 1000 of the orthodontic device, and the points 1100 may be lifted and fixed by the pressing force of the support means on both sides.

The fixing means 4000 may be a robot or a robot arm. After the fixing means recognizes the orthodontic device through a camera unit (not shown) and recognize the plurality of points 1100 in the orthodontic device, the orthodontic device may be lifted and fixed by the pair of support means.

The plurality of points 1100 are to be fixed by the fixing means 4000. Considering that the tooth structure is different between patients, when the entire shape of the orthodontic device is recognized, 3 or 4 optimal points for lifting and fixing the orthodontic device are recognized, and then a pair of support means may press the points on both sides to firmly fix them.

The orthodontic device from which the supporter has been separated is in a state in which only the tooth portion 1000 remains, and may be moved to a tray 6000 divided by patient as shown in FIG. 8 using the patient information previously identified prior to the washing step.

The orthodontic device placed in the tray 6000 may be subjected to a post-curing process.

Alternatively, in a state in which the patient information is identified, the orthodontic devices may be placed in a tray (not shown) individually without distinguishing between patients, and subjected to a post-curing process.

Whether to use the tray 6000 divided by patient may be determined depending on whether multiple orthodontic devices are simultaneously subjected to the post-curing process after printing.

If the orthodontic device does not undergo the post-curing process, the orthodontic device printed by the 3D printer may be deformed as the photocurable polymer is not fully cured. To prevent such deformation, the post-curing process is essential.

At this time, when the photocurable polymer is cured in a natural state or by sunlight, a problem may arise in that the orthodontic device may change in size or may be easily damaged by external force due to its weak strength. Therefore, a UV curing device 7000 may be used for the post-curing process.

When the UV curing device is used as described above, UV light may be irradiated to the 3D printed product to promote curing, thereby preventing deformation of the printed product and improving the strength, thus preventing damage caused by external force.

In addition, the post-curing process may be performed in an inert gas atmosphere. The inert gas may be selected from the group consisting of nitrogen, argon, helium, krypton, neon, and mixtures thereof. Preferably, the inert gas may be selected from the group consisting of nitrogen, argon, helium, and mixtures thereof.

When the post-curing process is performed in an inert gas atmosphere while irradiating with UV light, the curing speed of the 3D printed orthodontic device is improved, and its strength is also improved, so that the orthodontic device is not easily deformed even by higher levels of impact.

That is, when the curing process is performed by irradiating UV light in an inert gas atmosphere, the curing speed may be increased by the inert gas, and the strength of the printed product may be improved, compared to when the curing process is performed out by simply irradiating UV light.

In addition, when the post-curing process is performed in an inert gas atmosphere, the transparency of the transparent orthodontic device is further improved.

A transparent orthodontic device may be produced by printing with a DLP or SLA 3D printer using the photocurable polymer composition described below.

If the photocurable polymer is not completely cured, the 3D printed orthodontic device may have a slightly yellowish color, indicating that a completely transparent orthodontic device is not produced.

When the transparent orthodontic device is produced as a patient-specific printed product using 3D printing and used as an orthodontic device, if the transparency thereof is not excellent and a yellowish tint is even slightly present, the dental condition may be mistaken for a poor condition, which may have a negative impact on the user's appearance.

To avoid this problem, the 3D printed orthodontic device should be produced so that it is completely transparent state so as not to affect aesthetics.

On the other hand, according to the present invention, UV light is irradiated in an inert gas atmosphere during the post-curing process. In this case, due to the UV light irradiation, the curing speed is increased, the strength is improved, and the transparency of the orthodontic device is improved. In other words, when the post-curing process of the present invention is used, a completely transparent orthodontic device may be produced.

That is, when the post-curing process is performed using UV light in an inert gas atmosphere, the curing speed is improved, thereby increasing the production speed of the final product, and the product has excellent strength, and thus is not easily deformed by external force. Furthermore, the transparency is improved, so that superior product quality may be ensured.

The UV curing device 7000 may include a gas injection unit 7100 for injecting an inert gas into the interior and a UV lamp unit 7200.

After the post-curing process, a heat treatment step may be performed. Specifically, the heat treatment step may be performed by placing the post-cured orthodontic device in boiling water for 1 to 10 minutes or treating it with steam for 1 to 10 minutes.

Although the heat treatment process is a process for sterilization, it may also be used to check for defects in the orthodontic device produced through the above-described continuous process.

Generally, to confirm whether a photocurable polymer has been completely cured, FT-IR measurement needs to be performed. For FT-IR measurement as described above, separate measuring equipment should be purchased, and there is the inconvenience of having to measure to confirm the presence of individual defects.

In contrast, in the case where the orthodontic device produced by the continuous process of the present invention undergoes the heat treatment process as described above, if there is a portion of the photocurable polymer which has not been completely cured, haze is generated, so that whether or not it is a defective product may be easily determined with the naked eye.

After the heat treatment process, an additional polishing process may be performed to clean the edges and surface. The polishing process may be specifically a barrel polishing process, and although it is not an essential process that should be necessarily performed, surface work may be performed through the polishing process as needed.

Finally, after the polishing process, an ultrasonic washing process may be performed. The ultrasonic washing process may also be performed optionally.

The method for continuous production of the transparent orthodontic device as described above may include: a step of 3D printing the orthodontic device, a step of washing the printed orthodontic device in a rotating body; a step of separating the supporter; a step of post-curing; and a step of performing heat treatment. The continuous process is performed by an automatic process, and the movement of the plate member 30 in the 3D printer may also be performed by an automatic device. In addition, separating the printed orthodontic device from the plate member 30 and placing it in a spin dryer may also be performed as a continuous process by an automatic device. In addition, when the orthodontic device washed in the spin dryer is automatically recognized, lifted and supported by the fixing means 4000, the supporter removal device 5000 may recognize the orthodontic device and automatically remove the supporter portion 2000.

The orthodontic device from which the supporter portion 2000 has been removed is moved to the tray 6000 by the fixing means 4000, and the tray 6000 may be automatically moved into the post-curing device.

The means for automatically moving as described above may be a robot, a robot arm, or a lane. The means for automatically moving within the device is not limited to the robot, robot arm, or lane as described above, and any means for performing a continuous process may be used.

The photocurable polymer composition for a 3D printer may comprise: a photocurable oligomer for 3D printing represented by Formula 1 below; a monomer; a photoinitiator; and a stabilizer: 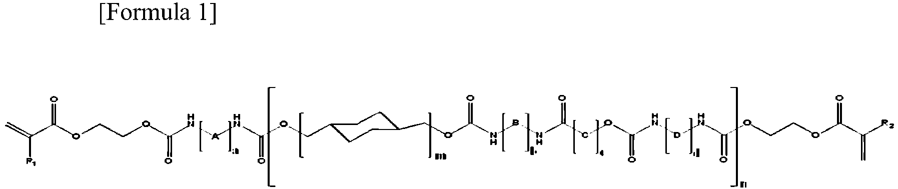 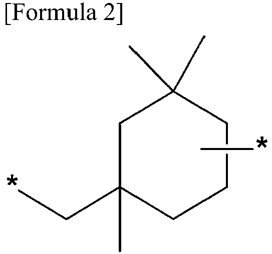 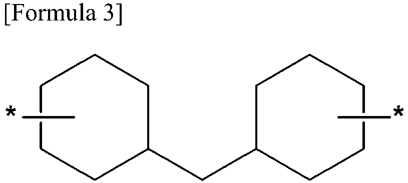 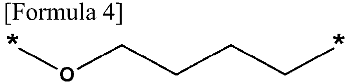 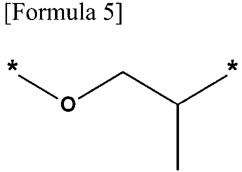 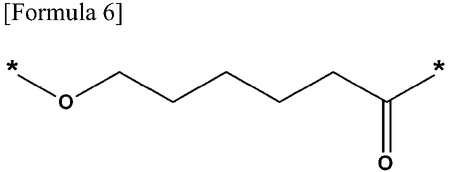 wherein
n is an integer ranging from 1 to 100,
m is an integer ranging from 1 to 50,
A, B, C and D are the same as or different from each other and are each independently a repeating unit selected from the group consisting of compounds represented by Formulas 2 to 6 above,
a, b, c and d are the same as or different from each other and are each independently an integer ranging from 1 to 30, and
R₁ and R₂ are the same as or different from each other and may be each independently selected from the group consisting of hydrogen, deuterium, a substituted or unsubstituted alkyl group having 1 to 30 carbon atoms, a substituted or unsubstituted alkenyl group having 2 to 30 carbon atoms, a substituted or unsubstituted alkynyl group having 2 to 30 carbon atoms, a substituted or unsubstituted aryl group having 6 to 30 carbon atoms, and a substituted or unsubstituted heteroaryl group having 1 to 30 carbon atoms.

The photocurable oligomer is characterized in that it comprises a urethane acrylate structure as a main chain, a photocurable functional group is linked to the urethane structure, and a soft functional group and a hard functional group are contained in the compound.

The printed product may exhibit flexible properties due to the soft functional group contained in the photocurable composition, and may also exhibit heat resistance due to the hard functional group.

That is, as the photocurable functional group is linked to the photocurable oligomer and the soft functional group and the hard functional group are used, the photocurable oligomer may exhibit a flexible effect using the carbon skeleton having soft properties at room temperature, as well as a strong heat resistance using a carbon skeleton having hard properties at room temperature.

As the photocurable oligomer contains the carbon skeleton having hard properties, it is possible to produce a 3D printed product which has excellent physical properties such as thermal properties, strength, elastic modulus, and tensile elongation, and may be restored to its original shape by heat

In addition, as the photocurable oligomer contains the carbon skeleton having soft properties, its shape may be deformed by an external force after heat is applied.

Generally, as described below, a composition for a 3D printer may comprise: a photocurable oligomer for 3D printing; a monomer; a photoinitiator; and a stabilizer. Although the oligomer, monomer, photoinitiator, and stabilizer contained in the composition all affect the physical properties of the printed product, the oligomer has the greatest effect. Accordingly, in general, in order to improve the physical properties of the 3D printed product, only a carbon skeleton having hard properties may be included, which may improve the physical properties of the printed product, but conversely, there is a problem in that if the shape is deformed due to use, the shape cannot be restored, and thus the printed product may not be used multiple times.

As the composition for a 3D printer in the present invention contains the carbon skeleton having hard properties and the carbon skeleton having soft properties, it has excellent physical properties such as thermal properties, strength, elastic modulus, and tensile elongation, and as the flexible property of the soft functional group may also be used, when the shape thereof is deformed by an external force in a state in which heat is applied, the deformed shape may be fixed, and when heat is applied again, the deformed shape may be restored to the original shape.

A, B and D above are the same as or different from each other, and may each independently be a repeating unit selected from among the compounds represented by Formulas 2 and 3.

C may be a repeating unit selected from the group consisting of the compounds represented by Formulas 4 to 6.

Specifically, the photocurable oligomer represented by Formula 1 may be produced by a method for synthesizing a urethane acrylate series. Basically, a stepwise polymerization reaction of a diol and a diisocyanate is performed, and in order to prevent gelation of the materials due to an increase in molecular weights during the polymerization of the materials, an acrylic monomer with no reactive site is used as a suspension. As an acrylic monomer that may be used, the monomer used in the synthesis of the oligomer of the present invention may be isobornyl acrylate, cyclic trimethylolpropane formal acrylate, lauryl acrylate, lauryl methacrylate, 3,5,3-trimethelhexyl acrylate, tetrahydrofurfuryl acrylate, tetrahydrofurfuryl methacrylate, benzyl methacrylate, or the like.

More specifically, a diol is first added to the monomer base used as the monomer to stabilize it, and then a diisocyanate is added. As the urethane reaction proceeds, the heat of reaction is generated, the urethane chain length increases, and the molecular weight increases.

As the molecular weight increases, the viscosity of the materials may also increase. If the molecular weight increases rapidly, the temperature rises rapidly, and thus the urethane reaction proceeds more rapidly, so that the oligomer may gel before reaching a sufficient molecular weight, making it unusable as a material. Accordingly, in the present invention, in order to prevent such a reaction, as a solvent to which a diol is added, one selected from the group consisting of isobornyl acrylate, cyclic trimethylolpropane formal acrylate, lauryl acrylate, lauryl methacrylate, 3,5,3-trimethelhexyl acrylate, tetrahydrofurfuryl acrylate, tetrahydrofurfuryl methacrylate, benzyl methacrylate, and mixtures thereof is used. The solvent does not participate in the reaction, and is used to control the reaction rate of the materials and prevent a rapid increase in viscosity caused by an increase in molecular weight. In addition, the monomers for synthesizing the oligomer of the present invention have should not have a functional group capable of participating in the urethane reaction, such as a hydroxyl group or a urethane group. Through the above-described conditions, according to the present invention, it is possible to mass-produce the oligomer while ensuring excellent process stability.

In addition, the equivalent ratio between the diol and the diisocyanate is set so that the equivalent of the diisocyanate is higher than that of the diol, thereby inducing the oligomer end to exist as an isocyanate group. A reaction catalyst comprising a Zn-based catalyst may be used during the reaction process. The catalyst may or may not be used. The catalyst is used to accelerate the reaction, and the reaction may proceed even if the catalyst is not necessarily used. However, even if the catalyst is used, the reaction may proceed in the presence of a very small amount of the catalyst.

After the temperature rise is stopped due to the termination of the urethane reaction, 2-hydroxy acrylate and 2-hydroxy methacrylate are added dropwise to cap the ends of the oligomer.

The diol used for the production of the oligomer is follows:

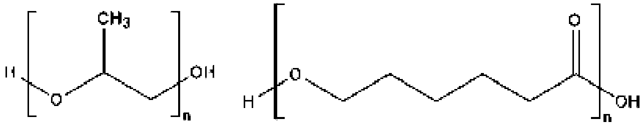

In addition, the diisocyanate for reacting with the diol is as follows:

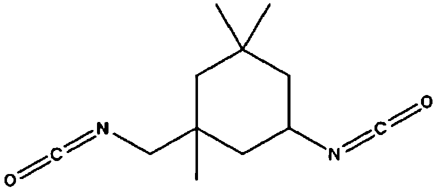

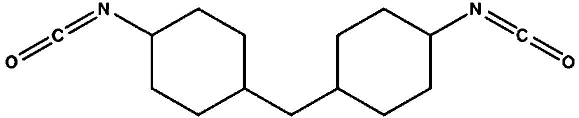

In addition, monomers that may be used to terminate the urethane reaction or increase the molecular weight are as follows:

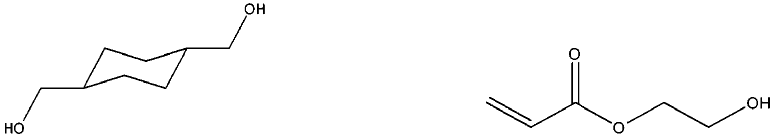

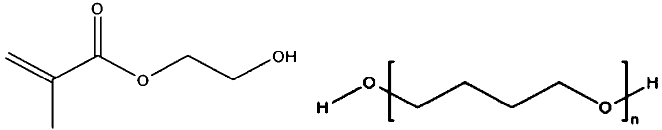

The compound represented by Formula 1 produced by the above-described production method may be selected from the group consisting of the following compounds: 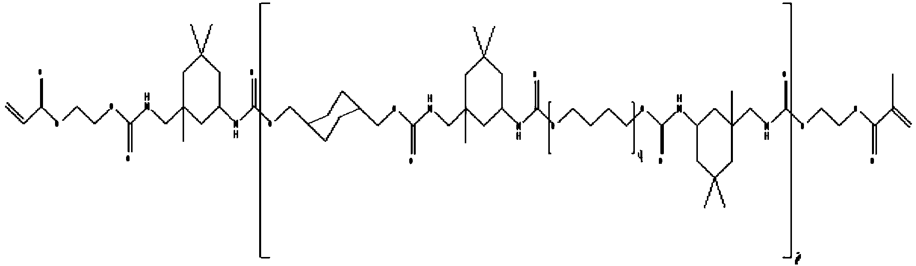 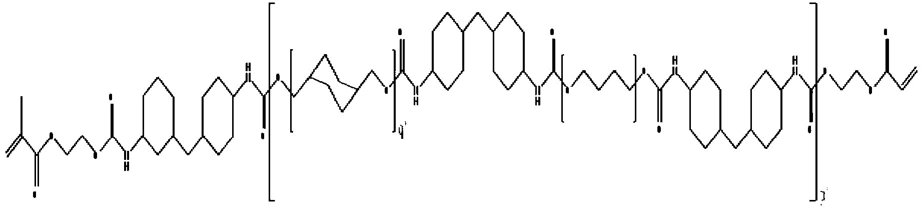 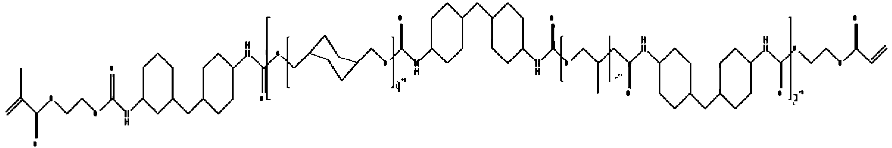 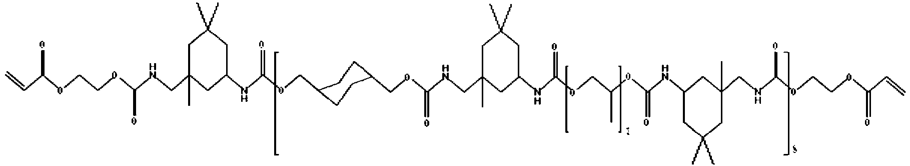 :

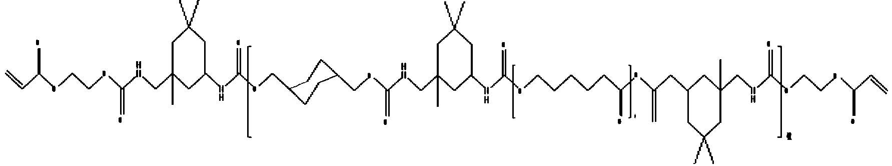

The photocurable oligomer may have a number-average molecular weight (Mn) of 1,500 to 6,000, 1,500 to 5,500, or 1,600 to 5,000. The photocurable oligomer may have a weight-average molecular weight (Mw) of 2,500 to 9,000, 3,000 to 8,500, or 3,500 to 8,000.

Using the oligomer having a number-average molecular weight and a weight-average molecular weight within the above ranges a photocurable composition for 3D printing described below may be prepared, and using the same, an orthodontic device may be printed in a shape fitting the patient's oral structure, and using the same, the convenience of use for the patient may be improved and the effect of expanding the maxillary arch may be increased. Specifically, when the orthodontic device of the present invention is immersed in water at 50 to 100°C and then its shape is deformed, its shape is fixed to the deformed shape, but when the orthodontic device is used in a state in which it is fitted to the upper or lower jaw, the orthodontic device, whose shape has been changed, gradually returns to its original shape due to body temperature and may exhibit the effect of expanding the maxillary arch.

As described above, when various oligomers are selected according to the physical properties required for each product, such as tensile strength, flexural strength, and flexural elastic modulus, and a photocurable composition for 3D printing is prepared using the same, the composition may exhibit the characteristics of a shape memory polymer, and thus may be provided as a patient-specific orthodontic device.

The photocurable oligomer may have a viscosity of 2,000 cP to 3,500 cP, 2,100 cP to 3,200 cP, or 2,200 cP to 3,000 cP. When a photocurable composition is prepared using the oligomer having a viscosity within the above range, the composition may be provided with a viscosity suitable for use in a 3D printer.

As the photoinitiator, BP, TPO, DCP, BPO, DPPO, or the like may be used, but preferably DPPO (2-hydroxy-2-methylpropiophenone) may be used. However, the photoinitiator is not limited to the above examples, and any photoinitiator enabling the preparation of the photocurable composition may be used without limitation.

The stabilizer may be selected from the group consisting of tertiary amines such as diethylethanolamine and trihexylamine, hindered amines, organic phosphates, and hindered phenols. However, the stabilizer is not limited to the above examples, and any stabilizer enabling the preparation of the photocurable composition may be used without limitation.

In addition to the photoinitiator and the stabilizer, other additives may be additionally included.

The additives serve to improve thermal and oxidation stability, storage stability, surface properties, flow properties, and process properties, and include conventional additives such as leveling agents, slip agents, or stabilizers.

A photocurable composition according to one embodiment of the present invention may include, based on 100 parts by weight of a UV resin, 1 part by weight of a photoinitiator. The UV resin includes: the photocurable oligomer of the present invention; and a monomer. More specifically, the UV resin may include the compound represented by Formula 1, the compound represented by Formula 7, and the compound represented by Formula 8 at a weight ratio of 1:1:1 to 2:1:1.

Although the preferred embodiments of the present invention have been described in detail above, the scope of the present invention is not limited thereto, and various modifications and improvements made by those skilled in the art using the basic concept of the present invention as defined in the appended claims also fall within the scope of the present invention.

### Industrial Applicability

The present invention relates to a method for continuous production of a transparent orthodontic device and a transparent orthodontic device produced by the process for continuous production thereof.

## Claims

1. A method for continuous production of a transparent orthodontic device, comprising:
a 3D input step of inputting 3D information on a patient's oral structure;
a 3D model generation step of generating a plurality of 3D models divided into a plurality of regions by setting a range of interest using the 3D information and setting a central axis of the oral structure as an x-axis;
a 3D printing step of printing an orthodontic device from the plurality of 3D models using a 3D printer;
a step of washing the printed orthodontic device in a rotating body;
a step of separating a supporter from the washed orthodontic device;
a step of post-curing the orthodontic device from which the supporter has been separated; and
a step of heat-treating the post-cured orthodontic device.

2. The method of claim 1, wherein the 3D printer is a top-down 3D printer,
wherein the top-down 3D printer comprises:
a resin tank configured to store a photocurable polymer composition;
an optical module installed above the resin tank and configured to irradiate light from a light source;
a plate member positioned within the resin tank and movable up and down;
an inert gas injection unit configured to maintain a portion cured by irradiation of the photocurable polymer composition within the resin tank with light generated from the optical module in an inert gas atmosphere; and
a heating unit configured to increase a temperature within the resin tank to lower a viscosity of the photocurable polymer composition.

3. The method of claim 2, wherein the 3D printer further comprises a level control sensor configured to check a level of the photocurable polymer composition in the resin tank and to alarm whether the photocurable polymer composition needs to be replenished.

4. The method of claim 2, wherein the plate member is separable so that the orthodontic device is transferable to the step of washing after printing.

5. The method of claim 2, wherein the resin tank has a dual structure and comprises an internal resin tank part that is movable up and down and an external cover part.

6. The method of claim 1, wherein the 3D printed orthodontic device comprises a tooth portion, a supporter portion, and a bottom portion, and comprises a barcode that identifies patient information on the supporter portion and/or the bottom portion.

7. The method of claim 1, wherein the step of washing in the rotating body is performed to remove surface protrusions and residual resin from the printed orthodontic device.

8. The method of claim 1, wherein the step of separating the supporter portion is performed by fixing the orthodontic device by a fixing means, and then completely removing the supporter connected to the orthodontic device using a supporter removal device.

9. The method of claim 8, wherein the fixing means comprises a pair of support means,
wherein the support means recognize a plurality of points in the tooth portion of the orthodontic device and press and fix the points on both sides of the tooth portion.

10. The method of claim 8, wherein the supporter removal device separates the supporter portion from the orthodontic device by moving along a boundary where the orthodontic device and the supporter portion are connected to each other after the orthodontic device is fixed by the fixing means.

11. The method of claim 1, wherein the step of post-curing is performed by UV light irradiation in an inert gas atmosphere.

12. The method of claim 11, wherein the inert gas is selected from the group consisting of nitrogen, argon, helium, krypton, neon, and mixtures thereof.

13. The method of claim 11, wherein the orthodontic device cured by UV light irradiation has improved transparency.

14. The method of claim 1, wherein the step of heat-treating is performed by placing the post-cured orthodontic device in boiling water for 1 to 10 minutes.

15. The method of claim 1, wherein the step of heat-treating is performed by treating the post-cured orthodontic device with steam for 1 to 10 minutes.

16. A transparent orthodontic device produced by the method for continuous production according to any one of claims 1 to 15.
